(19) Europäisches Patentamt
European Patent Office
Office européen des brevets

(11) Veröffentlichungsnummer: **0 421 932 A1**

# (12) EUROPÄISCHE PATENTANMELDUNG

(21) Anmeldenummer: **90810741.0**

(22) Anmeldetag: **27.09.90**

(51) Int. Cl.5: **C08K 5/13**, C08K 5/37

(30) Priorität: **06.10.89 CH 3652/89**

(43) Veröffentlichungstag der Anmeldung: **10.04.91 Patentblatt 91/15**

(84) Benannte Vertragsstaaten: **DE FR GB IT**

(71) Anmelder: **CIBA-GEIGY AG**
**Klybeckstrasse 141**
**CH-4002 Basel(CH)**

(72) Erfinder: **Evans, Samuel, Dr.**
**Route des Charbonnières 17**
**CH-1723 Marly(CH)**
Erfinder: **Dubs, Paul, Dr.**
**Route du Confin 14**
**CH-1723 Marly(CH)**

## (54) Stabilisiertes organisches Material.

(57) Zusammensetzung enthaltend
a) ein gegen oxidativen, thermischen und aktinischen Abbau empfindliches organisches Material,
b) mindestens eine Verbindung der Formel I,

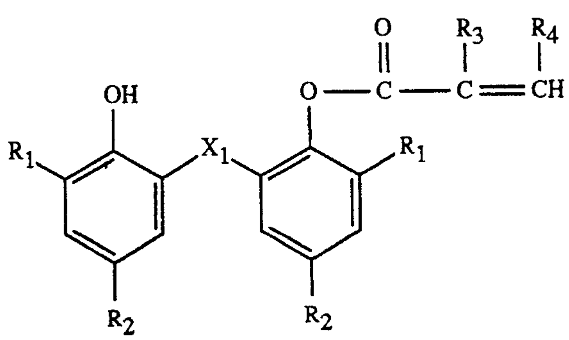

(I)

worin $X_1$ ein Schwefelatom oder $C_1$-$C_{12}$-Alkyliden bedeutet, $R_1$ und $R_2$ unabhängig voneinander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $R_3$ und $R_4$ unabhängig voneinander Wasserstoff oder $C_1$-$C_8$-Alkyl bedeuten, und
c) mindestens eine Verbindung der Formel IIa und/oder IIb,

EP 0 421 932 A1

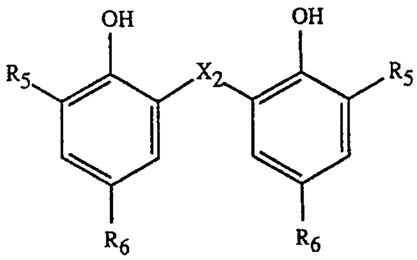

(IIa)

,

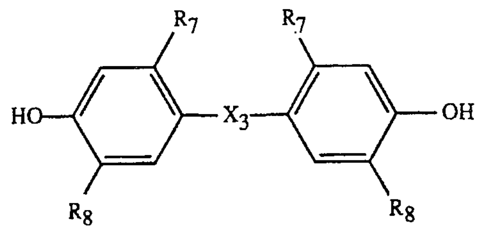

(IIb)

worin $X_2$ und $X_3$ unabhängig voneinander ein Schwefelatom oder $C_1$-$C_{12}$-Alkyliden bedeuten, $R_5$ und $R_6$ unabhängig voneinander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $R_7$ und $R_8$ unabhängig voneinander $C_1$-$C_4$-Alkyl bedeuten, mit der Bedingung, dass der Rest $X_3$ in der Formel IIb verschieden von Schwefel ist, wenn die Komponente a) ein Styrol-Butadien-Blockcopolymer ist.

## STABILISIERTES ORGANISCHES MATERIAL

Die vorliegende Erfindung betrifft Zusammensetzungen enthaltend a) ein gegen oxidativen, thermischen und aktinischen Abbau empfindliches organisches Material, b) ein Bisphenol-monoacrylat und c) ein Bisphenol sowie die Verwendung eines Gemisches enthaltend ein Bisphenol-monoacrylat und ein Bisphenol zum Stabilisieren von organischem Material.

Stabilisatoren aus der Gruppe der Bisphenole und der Bisphenol-monoacrylate sind bekannt und im Handel erhältlich.

JP-A-Sho 61/159442 offenbart Filme aus einem Styrol-Butadien-Blockcopolymer, welches unter anderem ein Bisphenol-monoacrylat und ein Bisphenol enthält.

Ein Gegenstand der vorliegenden Erfindung ist eine Zusammensetzung enthaltend

a) ein gegen oxidativen, thermischen und aktinischen Abbau empfindliches organisches Material,

b) mindestens eine Verbindung der Formel I,

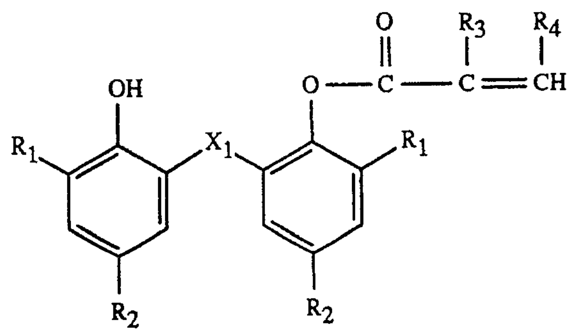

(I)

worin $X_1$ ein Schwefelatom oder $C_1$-$C_{12}$-Alkyliden bedeutet, $R_1$ und $R_2$ unabhängig von-einander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $R_3$ und $R_4$ unabhängig vonein ander Wasserstoff oder $C_1$-$C_8$-Alkyl bedeuten, und

c) mindestens eine Verbindung der Formel IIa und/oder IIb,

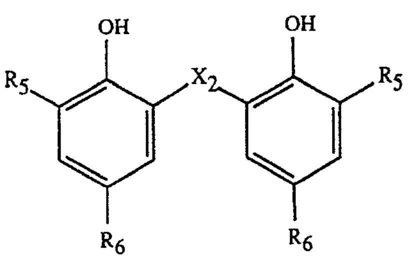

(IIa)

,

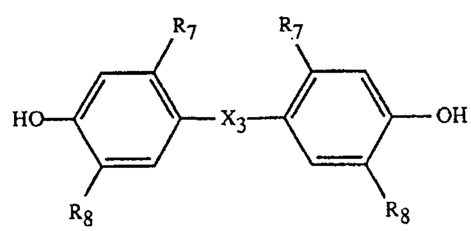

(IIb)

worin $X_2$ und $X_3$ unabhängig voneinander ein Schwefelatom oder $C_1$-$C_{12}$-Alkyliden bedeuten, $R_5$ und $R_6$ unabhängig voneinander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $R_7$ und $R_8$ unabhängig voneinander $C_1$-$C_4$-Alkyl bedeuten, mit der Bedingung, dass der Rest $X_3$ in der Formel IIb verschieden von Schwefel ist, wenn die Komponente a) ein Styrol-Butadien-Blockcopolymer ist.

$C_1$-$C_{12}$-Alkyliden bedeutet z.B. Methylen oder eine Gruppe -CHR-, wobei R bevorzugt geradkettiges Alkyl, insbesondere Methyl, ist. Methylen ist eine der besonders bevorzugten Bedeutungen von $X_1$, $X_2$ und $X_3$.

$C_1$-$C_{24}$-Alkyl bedeutet z.B. Methyl, Ethyl, Propyl, iso-Propyl, Butyl, tert-Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl oder Tetracosyl. $C_1$-$C_{18}$-Alkyl ist bevorzugt. Eine der besonders bevorzugten Bedeutungen von $R_1$, $R_2$, $R_5$ und $R_6$ ist $C_1$-$C_4$-Alkyl, z.B. Methyl oder tert-Butyl.

$C_5$-$C_{12}$-Cycloalkyl bedeutet z.B. Cyclopentyl, Cyclohexyl, Cycloheptyl, Cyclooctyl, Cyclononyl, Cyclodecyl oder Cyclododecyl. $C_5$-$C_7$-Cycloalkyl, insbesondere Cyclohexyl, ist bevorzugt.

Durch $C_1$-$C_4$-Alkyl substituiertes $C_5$-$C_7$-Cycloalkyl ist z.B. Methylcyclohexyl.

$C_7$-$C_{10}$-Phenylalkyl bedeutet z.B. Benzyl oder Phenylethyl.

Beispiele für $R_3$ und $R_4$ als $C_1$-$C_8$-Alkyl sind Methyl, Ethyl, Propyl, Butyl, Pentyl, Hexyl, Heptyl oder Octyl. $C_1$-$C_4$-Alkyl, insbesondere Methyl, ist bevorzugt.

Beispiele für $R_7$ und $R_8$ als $C_1$-$C_4$-Alkyl sind Methyl, Ethyl, Propyl, iso-Propyl, Butyl oder tert-Butyl. $R_7$ bedeutet bevorzugt Methyl und $R_8$ bedeutet bevorzugt tert-Butyl.

Von Interesse sind Zusammensetzungen, worin $X_1$, $X_2$ und $X_3$ unabhängig voneinander ein Schwefelatom oder $C_1$-$C_4$-Alkyliden sind, $R_1$, $R_2$, $R_5$ und $R_6$ unabhängig voneinander $C_1$-$C_{18}$-Alkyl, $C_5$-$C_7$-Cycloalkyl, durch $C_1$-$C_4$-Alkyl substituiertes $C_5$-$C_7$-Cycloalkyl, Phenyl oder $C_7$-$C_{10}$-Phenylalkyl bedeuten, $R_3$ und $R_4$ unabhängig voneinander Wasserstoff oder $C_1$-$C_4$-Alkyl sind, $R_7$ und $R_8$ unabhängig voneinander $C_1$-$C_4$-Alkyl bedeuten.

Als Komponente b) werden Verbindungen der Formel I bevorzugt, worin $X_1$ ein Schwefelatom, Methylen oder Ethyliden bedeutet, $R_1$ und $R_2$ unabhängig voneinander $C_1$-$C_4$-Alkyl, Cyclohexyl, Methylcyclohexyl, Phenyl oder Benzyl sind, $R_3$ und $R_4$ unabhängig voneinander Wasserstoff oder $C_1$-$C_4$-Alkyl bedeuten.

Besonders bevorzugt sind Verbindungen der Formel I, worin $X_1$ ein Schwefelatom, Methylen oder Ethyliden ist, $R_1$ und $R_2$ unabhängig voneinander $C_1$-$C_4$-Alkyl sind, $R_3$ und $R_4$ Wasserstoff oder Methyl sind.

Als Komponente c) werden Verbindungen der Formel IIa bevorzugt, worin $X_2$ ein Schwefelatom, Methylen oder Ethyliden bedeutet, $R_5$ und $R_6$ unabhängig voneinander $C_1$-$C_4$-Alkyl, Cyclohexyl, Methylcyclohexyl, Phenyl oder Benzyl bedeuten.

Besonders bevorzugt sind Verbindungen der Formel IIa, worin $X_2$ ein Schwefelatom, Methylen oder Ethyliden ist, $R_5$ und $R_6$ unabhängig voneinander $C_1$-$C_4$-Alkyl bedeuten.

Bevorzugte Verbindungen der Formel IIb sind solche, worin $X_3$ ein Schwefelatom ist, $R_7$ und $R_8$ unabhängig voneinander $C_1$-$C_4$-Alkyl sind.

Von besonderem Interesse sind Zusammensetzungen, worin die Komponente b)

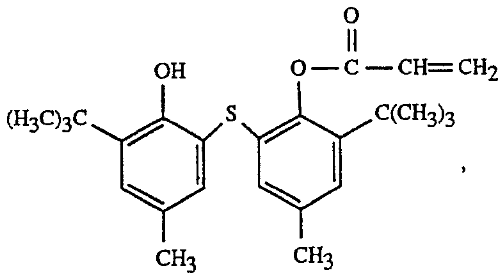

,

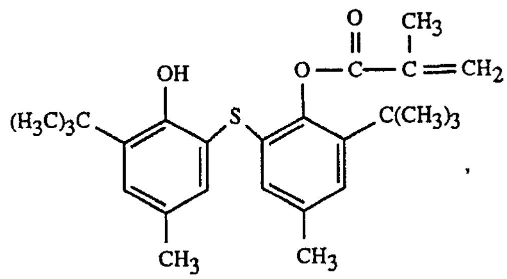

,

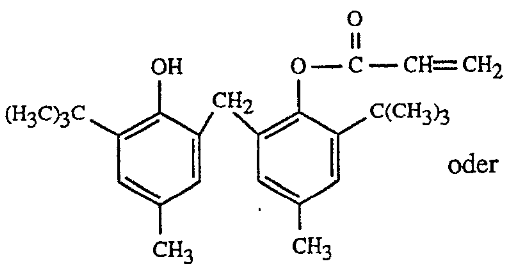

oder

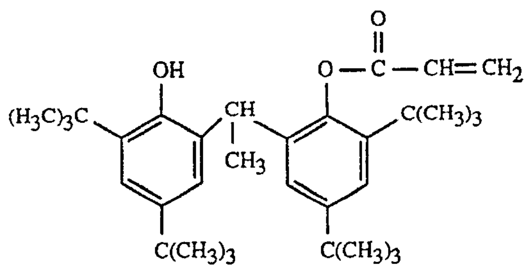

ist, und die Komponente c)

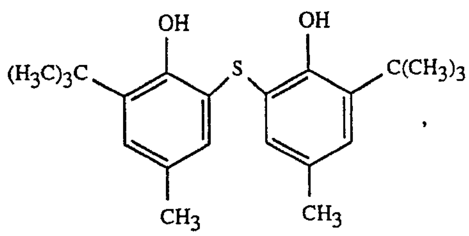

,

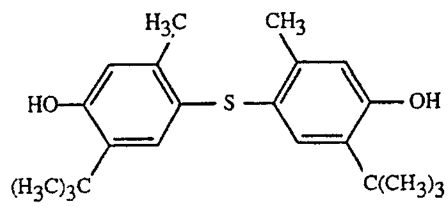

,

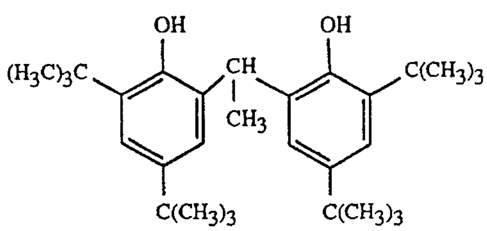

oder

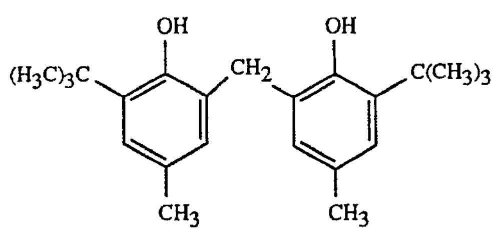

ist.

Besonders bevorzugte Zusammensetzungen sind solche, worin die Komponente b)

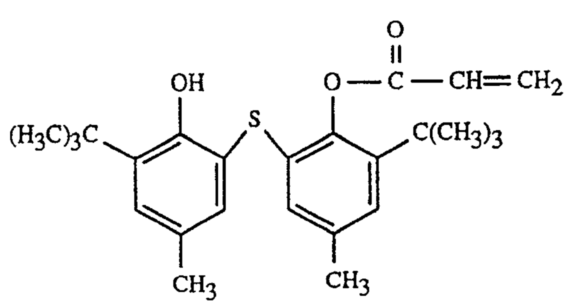

bedeutet, und die Komponente c)

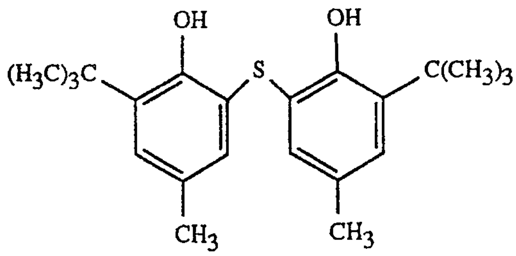

ist.

Beispiele für die Komponente a) sind:

1. Polymere von Mono- und Diolefinen, beispielsweise Polypropylen, Polyisobutylen, Polybuten- 1, Polymethylpenten- 1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylenpropylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-(a-methylstyrol).
5. Copolymere von Styrol oder a-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder a-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von a,b-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Hamstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Hamstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder

Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Die Komponente a) ist bevorzugt ein synthetisches Polymer, ein synthetisches Öl oder ein Mineralöl. Polyolefine, wie z.B. die unter den obigen Punkten 1 bis 3 angegebenen Polymere, insbesondere vernetzte oder zu vernetzende Polyolefine, werden besonders bevorzugt als Komponente a) eingesetzt. Das Gemisch aus den Komponenten b) und c) eignet sich aufgrund seines Schmelzpunktes besonders zum Stabilisieren von vernetztem Polyethylen.

Die Konzentration der Komponenten b) und c) zusammen beträgt zweckmässig 0,01 bis 10 %, bevorzugt 0,01 bis 5 %, insbesondere 0,01 bis 2 % oder 0,05 bis 2 %, bezogen auf das Gesamtgewicht der Zusammensetzung. Das Verhältnis der Komponenten b) und c) ist z.B. 95/5 bis 5/95, bevorzugt 80/20 bis 60/40, insbesondere 75/25 bis 65/35, z.B. 75/25 bis 70/30 oder 70/30 bis 65/35.

Neben den Komponenten a), b) und c) können die erfindungsgemässen Zusammensetzungen zusätzlich herkömmliche Additive enthalten, wie beispielsweise die unten angegebenen.

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butylhydrochinon, 2,5-Di-tert.amyl-hydrochinon, 2,6-Diphenyl-4-octadecyloxyphenol.

1.3. Hydroxylierte Thiodiphenylether, z.B. 4,4′-Thio-bis-(6-tert.butyl-3-methylphenol), 4,4′-Thio-bis-(6-tert.butyl-2-methylphenol).

1.4. Alkyliden-Bisphenole, z.B. 4,4′-Methylen-bis(2,6-di-tert.butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3′-tert.-butyl-4′-hydroxyphenyl)-butyrat], Bis-(3-tert.butyl-4-hydroxy-5-methyl-phenyl)-dicyclopentadien, Bis-[2-(3′-tert.butyl-2′-hydroxy-5′-methyl-benzyl)-6-tert.butyl-4-methyl-phenyl]-terephthalat.

1.5 Benzylverbindungen, z.B. 1,3,5-Tris-(3,5-di-tert.butyl-4-hydroxy-benzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)-isocyanurat.

1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octa- decanol, 1 ,6-Hexandiol, Neopentylglycol, Thiodiethylenglycol, Diethylenglycol, Triethylenglycol, Pentaerythrit, Tris(hydroxyethyl)-isocyanurat, N,N′-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.10. Amide der β-(3,5-Di-tert.butyl-4-hydroxyphenyl)-propionsäure, wie z.B. N,N′-Bis-(3,5-di-tert.butyl-4-hydroxyphenylpropionyl)-hexamethylendiamin, N,N′-Bis-(3,5-di-tert.butyl-4-hydroxyphenylpropionyl)-trimethylendiamin, N,N′-Bis-(3,5-di-tert.butyl-4-hydroxyphenylpropionyl)-hydrazin.

2. UV-Absorber und Lichtschutzmittel

2.1. 2-(2′-Hydroxyphenyl)-benztriazole, wie z.B. das 5′-Methyl-, 3′,5′-Di-tert.butyl-, 5′-tert.Butyl-, 5′-(1,1,3,3-Tetramethylbutyl)-, 5-Chlor-3′,5′-di-tert.butyl-, 5-Chlor-3′-tert.butyl-5′-methyl-, 3′-sec.Butyl-5′-tert.butyl, 4′-Octoxy-, 3′,5′-Di-tert.amyl-, 3′,5′-Bis-(α,α-dimethylbenzyl)-Derivat.

2.2. 2-Hydroxybenzophenone , wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat.

2.3. Ester von gegebenenfalls substituierten Benzoesäuren , wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate , wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen , wie z.B. Nickelkomplexe des 2,2′-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine , wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzylmalonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N′-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1′-(1,2-Ethandiyl)-bis-(3,3,5,5-tetramethyl-piperazinon).

2.7. Oxalsäurediamide , wie z.B. 4,4′-Di-octyloxy-oxanilid, 2,2′-Di-octyloxy-5,5′-di-tert.butyl-oxanilid, 2,2′-Di-dodecyloxy-5,5′di-tert.butyl-oxanilid, 2-Ethoxy-2′-ethyl-oxanilid, N,N′-Bis-(3-dimethylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o- und p-Methoxy- sowie von o- und p-Ethoxy-di-substituierten Oxaniliden.

2.8. 2-(2-Hydroxyphenyl)-1,3,5-triazine , wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

3. Metalldesaktivatoren , wie z.B. N,N′-Diphenyloxalsäurediamid, N-Salicylal-N′-salicyloylhydrazin, N,N′-Bis-(salicyloyl)-hydrazin, N,N′-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite , wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, 3,9-Bis-(2,4-di-tert.butylphenoxy)-2,4,8,10-tetraoxa-3,9-diphosphaspiro[5.5]-undecan.

5. Peroxidzerstörende Verbindungen , wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren , wie z.B. Kupfersalze in Kombination mit Jodiden und/oder Phosphorverbindungen und Salze des zweiwertigen Mangans.

7. Basische Co-Stabilisatoren , wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel , wie z.B. 4-tert.Butylbenzoesäure, Adipinsäure, Diphenylessigsäure.

9. Füllstoffe und Verstärkungsmittel , wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze , wie z.B. Weichmacher, Gleitmittel, Emulgatoren, Pigmente, Optische Aufheller, Flammschutzmittel, Antistatika, Treibmittel.

Die herkömmlichen Additive werden beispielsweise in Konzentrationen von 0,01 bis 10 %, bezogen auf das Gesamtgewicht der Zusammensetzung, zugesetzt.

Die Komponenten b) und c) können einzeln oder als Gemisch dem zu stabilisierenden Material (Komponente a)) zugesetzt werden. Wenn das zu stabilisierende Material ein Polymeres ist, können die Komponenten b) und c) auch vor oder während der Polymerisation oder der Vernetzung zugegeben werden. Die Einarbeitung der Komponenten b) und c) sowie gegebenenfalls weiterer Additive in ein polymeres Material kann beispielsweise auch vor oder während der Formgebung oder auch durch Aufbringen der gelösten oder dispergierten Verbindungen auf ein polymeres Material, gegebenenfalls unter nachträglichem Verdunsten des Lösungsmittels, erfolgen.

Die Komponenten b) und c) können auch einzeln oder zusammen in Form eines Masterbatches, der diese beispielsweise in einer Konzentration von 2,5 bis 25 Gew.-% enthält, dem zu stabilisierenden Material zugegeben werden.

Die stabilisierten Materialien können in verschiedenster Form angewendet werden, z.B. als Folien, Fasern, Bändchen, Formmassen, Profile oder als Bindemittel für Lacke, Klebstoffe oder Kitte oder als Isolationsmaterial für Drähte, insbesondere Starkstromdrähte.

Die Verbindungen der Formeln I, IIa und IIb sind bekannt und können, sofern sie nicht im Handel erhältlich sind, nach üblichen, dem Fachmann bekannten Methoden, z.B. wie in US-A-3,984,372 beschrieben, hergestellt werden.

Ein weiterer Gegenstand der Erfindung ist die Verwendung eines Gemisches enthaltend mindestens eine Verbindung der Formel I und mindestens eine Verbindung der Formel IIa und/oder IIb zum Stabilisieren eines organischen Materials gegen oxidativen, thermischen und aktinischen Abbau, mit der Bedingung, dass der Rest $X_3$ in der Formel IIb verschieden von Schwefel ist, wenn das organische Material ein Styrol-Butadien-Blockcopolymer ist.

Die folgenden Beispiele erläutern die Erfindung weiter.

Beispiel 1:

26 g Polyethylen (Dichte = (0,926 - 0,929)g/cm$^3$; Schmelzindex = (0,15 -0,30)g/10 min bei 190 °C und 2,16kg) werden mit 0,28 Gew.-% 2,2'-Thio-bis[6-tert-butyl-4-methylphenol]monoacrylat und 0,12 Gew.-% 2,2'-Thio-bis[6-tert-butyl-4-methylphenol] gemischt und in einem Brabender-Plastographen 5 Minuten bei 125 °C plastifiziert. Anschliessend werden weitere 12 g Polyethylen zusammen mit 2 Gew.-% Dicumylperoxid als Radikalbildner zugesetzt und das Gemisch 5 Minuten bei 125 °C geknetet. Die erhaltene Polymerschmelze wird in einer Presse bei 125 °C zu einer 1 mm dicken Platte gepresst. In einer zweiten Presse erfolgt bei 180 °C während 15 Minuten die Vernetzung des Polymeren, aus dem die Platte besteht. In einer dritten Presse wird die Platte auf Zimmertemperatur gekühlt. Aus dieser Platte werden dann Prüfkörper in Hantelform gemäss DIN 52 504 gestanzt. Zur Bestimmung der Alterungsbeständigkeit werden die Prüfkörper in einen auf 150 °C geheizten Umluftofen gehängt und in regelmässigen Abständen einer Kraft-Dehnungs-Prüfung unterworfen. Die erhaltenen Resultate zeigen einen ausgezeichneten Stabilisierungseffekt.

Beispiel 2:

26 g Polyethylen (Dichte = 0,92 g/cm$^3$; Schmelzindex = 2 g/10 min bei 190 °C und 2,16kg) werden mit 0,14 Gew.-% 2,2'-Thio-bis[6-tert-butyl-4-methylphenol]monoacrylat und 0,06 Gew.-% 2,2'-Thio-bis[6-tert-butyl-4-methylphenol] gemischt und in einem Brabender-Plastographen 3 Minuten bei 130 °C plastifiziert. Anschliessend werden weitere 12 g Polyethylen zusammen mit 1,8 Gew.-% Dicumylperoxid als Radikalbildner zugesetzt und das Gemisch 7 Minuten bei 130 °C geknetet. Die erhaltene Polymerschmelze wird in einer Presse bei 130 °C zu einer 1 mm dicken Platte gepresst. In einer zweiten Presse erfolgt bei 180 °C während 15 Minuten die Vernetzung des Polymeren, aus dem die Platte besteht In einer dritten Presse wird die Platte auf Zimmertemperatur gekühlt. Aus dieser Platte werden dann Prüfkörper in Hantelform gemäss DIN 52 504 gestanzt. Zur Bestimmung der Alterungsbeständigkeit werden die Prüfkörper in einen auf 150 °C geheizten Umluftofen gehängt und in regelmässigen Abständen auf Zersetzung geprüft, welche im vorliegenden Fall nach 96 Stunden entritt.

**Ansprüche**

1. Zusammensetzung enthaltend

a) ein gegen oxidativen, thermischen und aktinischen Abbau empfindliches organisches Material,

b) mindestens eine Verbindung der Formel I,

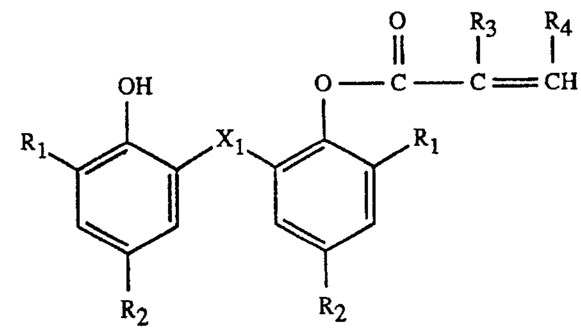

(I)

worin $X_1$ ein Schwefelatom oder $C_1$-$C_{12}$-Alkyliden bedeutet, $R_1$ und $R_2$ unabhängig voneinander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $R_3$ und $R_4$ unabhängig voneinander Wasserstoff oder $C_1$-$C_8$-Alkyl bedeuten, und

c) mindestens eine Verbindung der Formel IIa und/oder IIb,

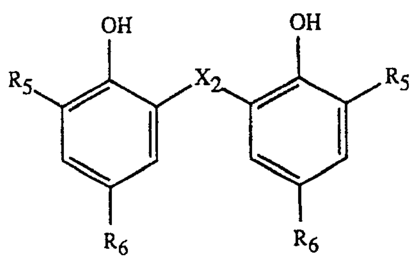

(IIa)

,

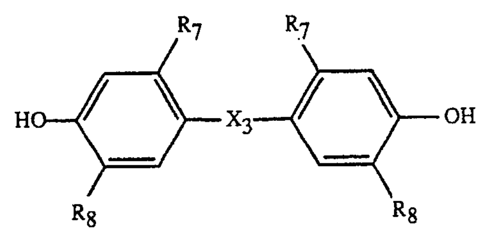

(IIb)

worin $X_2$ und $X_3$ unabhängig voneinander ein Schwefelatom oder $C_1$-$C_{12}$-Alkyliden bedeuten, $R_5$ und $R_6$ unabhängig voneinander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenyl alkyl sind, $R_7$ und $R_8$ unabhängig voneinander $C_1$-$C_4$-Alkyl bedeuten, mit der Bedingung, dass der Rest $X_3$ in der Formel IIb verschieden von Schwefel ist, wenn die Komponente a) ein Styrol-Butadien-Blockcopolymer ist.

2. Zusammensetzung gemäss Anspruch 1, worin $X_1$, $X_2$ und $X_3$ unabhängig voneinander ein Schwefelatom oder $C_1$-$C_4$-Alkyliden sind, $R_1$, $R_2$, $R_5$ und $R_6$ unabhängig voneinander $C_1$-$C_{18}$-Alkyl, $C_5$-$C_7$-Cycloalkyl, durch $C_1$-$C_4$-Alkyl substituiertes $C_5$-$C_7$-Cycloalkyl, Phenyl oder $C_7$-$C_{10}$-Phenylalkyl bedeuten, $R_3$ und $R_4$ unabhängig voneinander Wasserstoff oder $C_1$-$C_4$-Alkyl sind, $R_7$ und $R_8$ unabhängig voneinander $C_1$-$C_4$-Alkyl bedeuten.

3. Zusammensetzung gemäss Anspruch 1, worin $X_1$ ein Schwefelatom, Methylen oder Ethyliden bedeutet, $R_1$ und $R_2$ unabhängig voneinander $C_1$-$C_4$-Alkyl, Cyclohexyl, Methylcyclohexyl, Phenyl oder Benzyl sind, $R_3$ und $R_4$ unabhängig voneinander Wasserstoff oder $C_1$-$C_4$-Alkyl bedeuten.

4. Zusammensetzung gemäss Anspruch 1, worin $X_1$ ein Schwefelatom, Methylen oder Ethyliden ist, $R_1$ und $R_2$ unabhängig voneinander $C_1$-$C_4$-Alkyl sind, $R_3$ und $R_4$ Wasserstoff oder Methyl sind.

5. Zusammensetzung gemäss Anspruch 1, worin $X_2$ ein Schwefelatom, Methylen oder Ethyliden bedeutet, $R_5$ und $R_6$ unabhängig voneinander $C_1$-$C_4$-Alkyl, Cyclohexyl, Methylcyclohexyl, Phenyl oder Benzyl bedeuten.

6. Zusammensetzung gemäss Anspruch 1, worin $X_2$ ein Schwefelatom, Methylen oder Ethyliden ist, $R_5$ und $R_6$ unabhängig voneinander $C_1$-$C_4$-Alkyl bedeuten.

7. Zusammensetzung gemäss Anspruch 1, worin $X_3$ ein Schwefelatom ist, $R_7$ und $R_8$ unabhängig voneinander $C_1$-$C_4$-Alkyl sind.

8. Zusammensetzung gemäss Anspruch 1, worin die Komponente b)

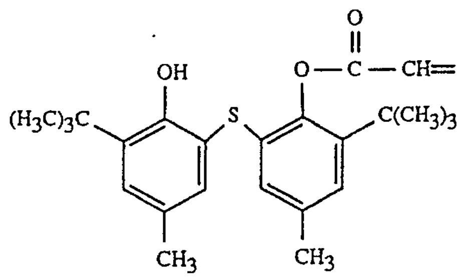
,
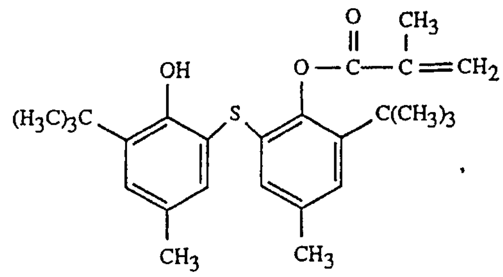
,

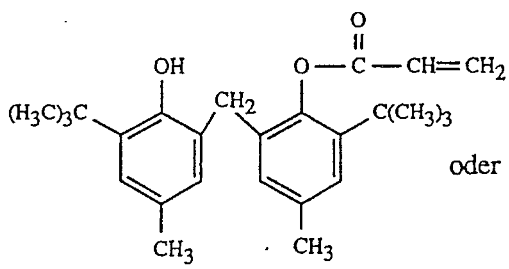
oder
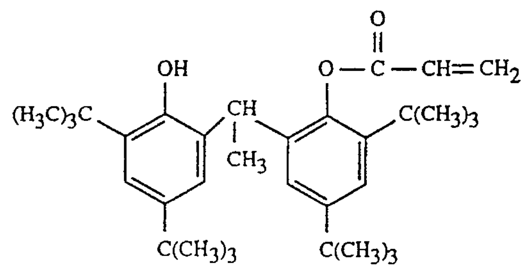

ist, und die Komponente c)

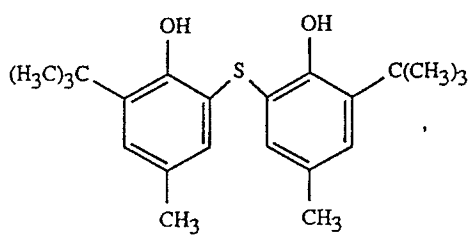
,
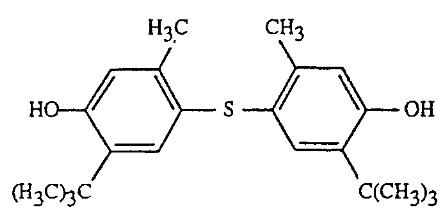
,

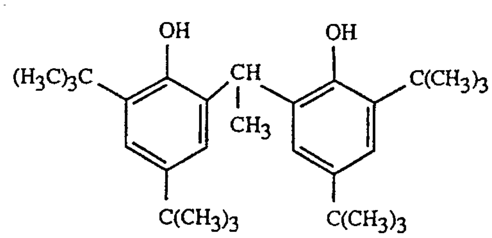
oder
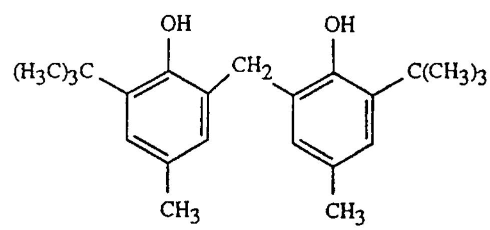

ist.

9. Zusammensetzung gemäss Anspruch 1, worin die Komponente b)

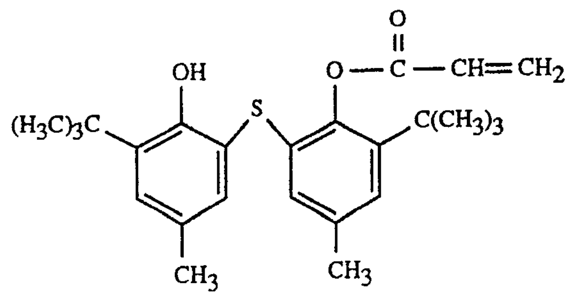

ist und die Komponente c)

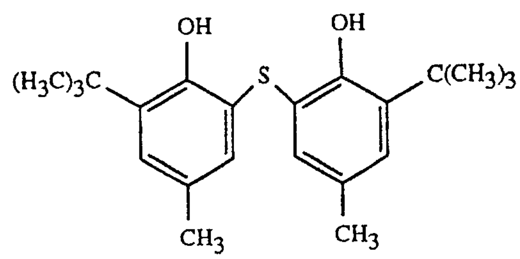

ist.

10. Zusammensetzung gemäss Anspruch 1, worin die Komponente a) ein synthetisches Polymer, ein synthetisches Öl oder ein Mineralöl ist.

11. Zusammensetzung gemäss Anspruch 1, worin die Komponente a) ein Polyolefin ist.

12. Verwendung eines Gemisches enthaltend mindestens eine Verbindung der Formel I gemäss Anspruch 1 und mindestens eine Verbindung der Formel IIa und/oder IIb gemäss Anspruch 1 zum Stabilisieren eines organischen Materials gegen oxidativen, thermischen und aktinischen Abbau, mit der Bedingung, dass der Rest $X_3$ in der Formel IIb verschieden von Schwefel ist, wenn das organische Material ein Styrol-Butadien-Blockcopolymer ist.

Europäisches Patentamt

# EUROPÄISCHER RECHERCHENBERICHT

Nummer der Anmeldung

EP 90 81 0741

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D | NN-A- (Host: STN)ref. no. 106(12): 85880S; Columbus Ohio&JP-A-61159442 (Mitsubishi Plastics Ind. LTD.) 19-07-1986 | 1-9 | C 08 K 5/13<br>C 08 K 5/37 |
| A | EP-A-0 079 806 (SUMITOMO CHEMICAL COMPANY LTD) * Seite 2, Zeile 5 - Seite 4, Zeile 23 * | 1-12 | |
| A | US-A-4 221 699 (C.ARNAUD ET AL) * Spalte 3, Zeile 6 - Spalte 6, Zeile 20 * | 1-12 | |
| A | DD-A-2 649 30 (VEB CHEMISCHE WERKE) * Seite 1, Zeile 17 - Seite 39 * | 1 | |

RECHERCHIERTE SACHGEBIETE (Int. Cl.5)

C 08 L
C 08 K

Der vorliegende Recherchenbericht wurde für alle Patentansprüche erstellt

| Recherchenort | Abschlußdatum der Recherche | Prüfer |
|---|---|---|
| Den Haag | 18 Dezember 90 | WILSON A.J.D. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument